# FASCICULE DE BREVET EUROPEEN

(11) **EP 3 095 625 B1**
(45) Date de publication et mention de la délivrance du brevet: **15.01.2020**
(21) Numéro de dépôt: 16168674.6
(22) Date de dépôt: 09.05.2016
(51) Int. Cl.: B60H 1/00, G01C 21/34, G08G 1/0967

(54) **DISPOSITIF DE DÉPOLLUTION D'AIR À STRATÉGIE DE DÉPOLLUTION DÉFINIE EN FONCTION DE L'ITINÉRAIRE PRÉVU D'UN VÉHICULE**
VORRICHTUNG ZUR LUFTREINIGUNG MIT REINIGUNGSTRATEGIE, DIE ENTSPRECHEND DER GEPLANTEN FAHRSTRECKE EINES FAHRZEUGS DEFINIERT WIRD
DEVICE FOR POLLUTION CONTROL OF AIR WITH A POLLUTION CONTROL STRATEGY DEFINED IN ACCORDANCE WITH THE PLANNED ROUTE OF A VEHICLE

(30) Priorité: 20.05.2015 FR 1554507
(43) Date de publication de la demande: 23.11.2016
(73) Titulaire: PSA Automobiles SA, 78300 Poissy (FR)
(72) Inventeur: PAJOT, KARINE, 91370 VERRIERES LE BUISSON (FR); PINTAT, BRUNO, 92140 CLAMART (FR); AUBRY, VINCENT, 91400 ORSAY (FR); DUMUR, DENIS, 78990 ELANCOURT (FR)

(56) Documents cités:
- DE-A1-102008 056 907
- DE-A1-102013 220 595
- KR-A- 20090 121 805
- US-A1- 2011 246 022

## Description

L'invention concerne les dispositifs qui sont chargés de dépolluer de l'air devant alimenter un habitacle de véhicule.

L'air qui alimente l'habitacle d'un véhicule provenant de l'extérieur de ce dernier et/ou de l'intérieur, il est donc fréquemment pollué par des polluants, tels que des poussières (de tailles importantes), des particules fines (par exemple de type PM10, PM2,5 et PM1), et des gaz inodores (par exemple de l'oxyde d'azote (ou NOₓ), ou du monoxyde de carbone (ou CO)), ou odorants (par exemple un gaz carboné de type CₓH_{y}).

Par conséquent, certains véhicules, généralement de type automobile, comprennent au moins un dispositif de dépollution chargé de dépolluer de l'air qui alimente leur habitacle. On notera qu'un tel dispositif peut soit faire partie d'une installation de traitement d'air d'un véhicule, comme par exemple une installation de chauffage et/ou climatisation, soit être un équipement additionnel et fonctionnant indépendamment d'une telle installation de traitement d'air.

Ce type de dispositif est habituellement chargé de déclencher une phase de dépollution de l'air lorsque la concentration d'au moins un polluant contenu dans l'air analysé par au moins un capteur dépasse un seuil choisi. Dans ce cas, la phase de dépollution peut consister à interdire l'alimentation de l'habitacle en air extérieur, et donc à n'autoriser l'alimentation de l'habitacle qu'avec de l'air recirculé (c'est-à-dire issu de ce dernier) sauf pendant de très courtes périodes destinées à régénérer l'air intérieur en oxygène. La dépollution de l'air résulte alors de la filtration effectuée en circuit fermé. En variante et/ou en complément, on peut faire fonctionner temporairement des moyens de dépollution additionnels qui sont implantés dans l'installation de traitement d'air et/ou dans l'habitacle. Un tel dispositif est par exemple connu du KR 20090121805 A.

Un inconvénient important de ce mode de dépollution réside dans le fait qu'il n'est mis en œuvre qu'une fois que l'on a détecté une concentration de polluant supérieure à un seuil, et donc après que les passagers de l'habitacle aient respiré de l'air pollué. Cette situation est d'autant plus pénalisante pour les passagers lorsque le véhicule ne dispose pas de moyens de dépollution additionnels étant donné qu'ils sont contraints de continuer de respirer l'air pollué contenu dans l'habitacle du fait de la pollution encore plus forte à l'extérieur.

De plus, en présence de moyens de dépollution additionnels, plus l'air intérieur est pollué, plus l'opération de dépollution est longue, et donc plus longtemps les passagers demeurent exposés à cette pollution.

L'invention a donc notamment pour but d'améliorer la situation.

Elle propose notamment à cet effet un dispositif de dépollution d'air destiné à équiper un véhicule comprenant un habitacle, des moyens de navigation agencés pour déterminer un itinéraire débutant à une heure de départ choisie en fonction de données cartographiques et de données d'information de circulation, et des moyens de communication propres à se connecter à un réseau de communication.

Ce dispositif comprend :
- des moyens de recherche agencés pour déterminer des données représentatives d'une qualité de l'air extérieur sur l'itinéraire via les moyens de communication, et
- des moyens de contrôle agencés pour déterminer et contrôler une stratégie de dépollution de l'air alimentant l'habitacle sur l'itinéraire, en fonction au moins des données de qualité de l'air extérieur déterminées et de données cartographiques et d'information de circulation relatives à cet itinéraire.

Ce dispositif se caractérise en ce que:
- lesdits moyens de contrôle sont agencés pour déterminer des plages temporelles de dépollution en fonction d'estimées de positions géographiques dudit véhicule à des instants estimés par lesdits moyens de navigation, ces plages temporelles de dépollution participant à la définition de ladite stratégie, et en ce que lesdits moyens de contrôle sont agencés pour déterminer des positions géographiques situées respectivement un peu avant des endroits de l'itinéraire où au moins un niveau de concentration de la pollution extérieure devrait être supérieur à un seuil prédéfini, pour associer une phase de dépollution à chacune desdites positions géographiques déterminées, et pour déclencher chaque phase de dépollution lorsqu'ils sont informés par lesdits moyens de navigation de l'arrivée dudit véhicule à ladite position géographique associée.

Dans une autre variante, ce dispositif se caractérise en ce que les moyens de recherche sont en outre agencés pour déterminer la localisation du véhicule et pour déterminer des données représentatives d'une qualité de l'air extérieur selon la localisation du véhicule.

Grâce à la stratégie de dépollution déterminée au début d'un itinéraire, on peut lancer des phases de dépollution avant de parvenir dans des zones où la pollution est trop forte et ainsi éviter que les passagers respirent de l'air pollué.

Le dispositif de dépollution d'air selon l'invention peut comporter d'autres caractéristiques qui peuvent être prises séparément ou en combinaison, et notamment :
- ses moyens de contrôle peuvent être agencés pour déterminer et contrôler la stratégie en fonction également d'un nombre de passagers présents dans l'habitacle et/ou de données météorologiques relatives à l'itinéraire et/ou de données représentatives d'un état en cours d'au moins un filtre de dépollution ;
- ses moyens de recherche peuvent être agencés pour déterminer des endroits caractéristiques dans l'itinéraire en fonction des données cartographiques et d'information de circulation relatives à cet itinéraire, puis pour déterminer des données représentatives de la qualité de l'air extérieur en ces endroits caractéristiques déterminés ;
- ses moyens de recherche peuvent être agencés pour déterminer des mises à jour de données de qualité de l'air extérieur sur l'itinéraire pendant que le véhicule emprunte ce dernier. Dans ce cas, ses moyens de contrôle peuvent être agencés pour adapter la stratégie en fonction au moins des mises à jour déterminées et de mises à jour de données d'information de circulation relatives à l'itinéraire ;
- ses moyens de recherche peuvent être agencés pour récupérer, via les moyens de communication, les données de qualité de l'air extérieur auprès d'au moins un site d'informations qui est accessible via le réseau de communication.
- ses moyens de recherche peuvent être agencés pour récupérer, via les moyens de communication, la localisation du véhicule.

L'invention propose également un véhicule automobile comprenant un habitacle alimenté en air et une installation de traitement d'air comprenant le dispositif de dépollution d'air et un volet d'alimentation propre à prendre différentes positions pour contrôler l'alimentation en air issu de l'extérieur de l'habitacle et/ou en air issu de l'intérieur de l'habitacle, les moyens de contrôle du dispositif de dépollution d'air peuvent être agencés pour contrôler la position de ce volet d'alimentation pendant des phases temporelles de dépollution de la stratégie de dépollution.

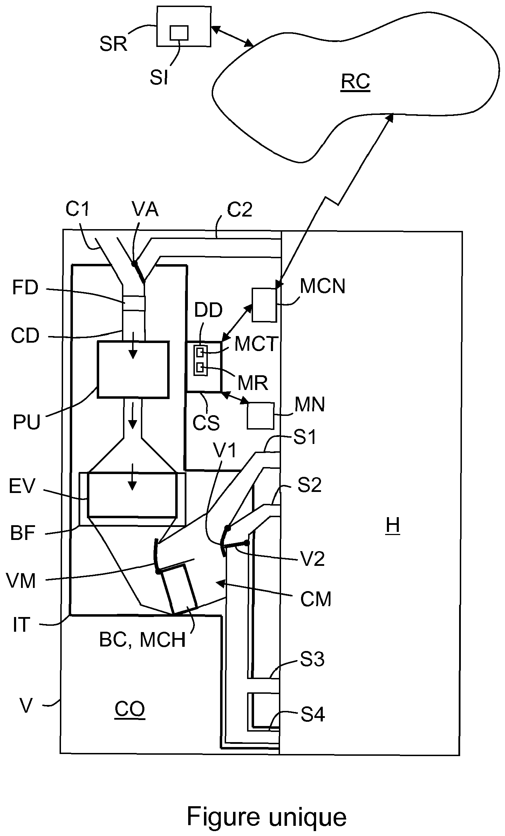

D'autres caractéristiques et avantages de l'invention apparaîtront à l'examen de la description détaillée ci-après, et du dessin annexé, sur lequel l'unique figure illustre schématiquement et fonctionnellement un véhicule couplé à un réseau de communication et comprenant un exemple d'installation de chauffage/climatisation comportant un exemple de réalisation d'un dispositif de dépollution d'air selon l'invention.

L'invention a notamment pour but de proposer un dispositif de dépollution d'air DD destiné à équiper un véhicule V comprenant au moins un habitacle H.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule, terrestre, maritime (ou fluvial), ou aérien.

On a schématiquement et fonctionnellement représenté sur l'unique figure un exemple de véhicule V comprenant un habitacle H, des moyens de navigation MN, des moyens de communication MCN propres à se connecter par voie d'ondes à un réseau de communication RC, et un exemple de réalisation d'un dispositif de dépollution d'air DD selon l'invention.

Les moyens de navigation MN sont agencés pour déterminer pour le véhicule V un itinéraire débutant à une heure de départ choisie en fonction de données cartographiques et de données d'information de circulation, et pour déterminer la position géographique en cours du véhicule V.

Par exemple, la détermination des positions géographiques peut se faire à partir de données fournies par des satellites d'une constellation (par exemple GPS).

Elle peut également se faire par Internet via un smartphone disposant d'un accès Internet et d'une application de navigation, connecté, par exemple par une liaison sans fil de type Bluetooth, à la plateforme télématique du véhicule.

La position géographique ou géolocalisation, peut être également réalisée par les moyens de communication MCN en exploitant le smartphone et un réseau de téléphonie mobile cellulaire de type GSM ou autre, auquel le smartphone est relié. Le smartphone étant par ailleurs connecté, par exemple par une liaison sans fil de type Bluetooth, à la plateforme télématique du véhicule.

Dans l'exemple illustré non limitativement sur l'unique figure, le dispositif de dépollution d'air DD fait partie d'une installation de traitement d'air IT du véhicule V, qui est chargée d'alimenter l'habitacle H en air traité. Mais ce dispositif de dépollution d'air DD pourrait être un équipement additionnel dédié à la dépollution et fonctionnant indépendamment de cette installation de traitement d'air IT. Cet équipement additionnel peut, par exemple, être installé sous un siège ou dans une console centrale implantée entre deux sièges.

Ici, l'installation de traitement d'air IT est une installation de chauffage/climatisation implantée dans le compartiment moteur CO du véhicule V et destinée à alimenter l'habitacle H en air traité. Mais l'installation de traitement d'air IT pourrait être une installation de chauffage ou une installation de climatisation.

Comme illustré, cette installation (de chauffage/climatisation) IT comprend notamment un dispositif de dépollution d'air DD, un pulseur PU, une boucle froide (ou boucle de climatisation) BF, une boucle chaude (ou boucle de chauffage) BC, un volet d'alimentation VA, un volet de mixage VM et des volets de distribution Vj.

Le pulseur PU est alimenté en air issu de l'extérieur de l'habitacle H et/ou en air issu de l'intérieur de l'habitacle H (ou air recirculé (ou recyclé)) par le volet d'alimentation (ou d'entrée d'air) VA. L'air extérieur est issu d'un premier conduit d'alimentation C1, et l'air recirculé est issu de l'habitacle H via un second conduit d'alimentation C2. Le débit d'air fourni par le pulseur PU dépend du niveau de puissance qui a été automatiquement calculé par un calculateur CS qui gère l'installation IT, ou bien choisi (et éventuellement programmé) par un passager du véhicule V au moyen d'un organe de commande qui est installé dans l'habitacle H, généralement dans la planche de bord.

La position du volet d'alimentation VA, et donc les proportions d'air extérieur et d'air recirculé qui alimentent l'installation IT (et notamment son pulseur PU), est/sont contrôlée(s) par le calculateur CS.

La boucle froide BF est alimentée en air par le pulseur PU via un conduit CD.

Dans l'exemple illustré non limitativement sur l'unique figure, le conduit CD comprend un unique filtre de dépollution FD. Mais le nombre de filtres de dépollution FD peut prendre n'importe quelle valeur supérieure ou égale à un (1).

Le (chaque) filtre de dépollution FD est destiné à filtrer au moins une espèce chimique sous forme solide (comme par exemple des particules fines ou des poussières) ou sous forme gazeuse (comme par exemple CO, O₃, SO₂, CₓH_{y} ou NO₂). Par ailleurs, un filtre de dépollution FD peut être éventuellement agencé pour filtrer plusieurs espèces chimiques prédéfinies (au moins deux).

On notera que ce filtre de dépollution FD pourrait être installé dans d'autres zones de l'installation IT, et notamment en amont de l'entrée du pulseur PU. Par ailleurs, en présence de plusieurs filtres de dépollution FD (au moins deux), ces derniers (FD) peuvent être éventuellement installés respectivement en des zones différentes de l'installation IT.

On notera également que lorsque le dispositif de dépollution d'air DD est un équipement additionnel, dédié à la dépollution et fonctionnant indépendamment de l'installation IT, il comprend ses propres moyens de dépollution, et notamment au moins un filtre de dépollution et un pulseur alimenté en air extérieur et/ou en air intérieur.

La boucle froide BF comporte notamment un évaporateur EV (traversé par l'air qui est issu du pulseur PU), ainsi qu'un compresseur, un condenseur et un circuit dans lequel circule un fluide frigorigène et qui est couplé à l'évaporateur EV, au compresseur et au condenseur.

La sortie de l'évaporateur EV est couplée à un conduit qui alimente ici, d'une part, une chambre de mixage CM présentant une première entrée dont l'accès est contrôlé par le volet de mixage VM, et, d'autre part, la boucle chaude BC dont l'accès est contrôlé par le volet de mixage VM et la sortie alimente une seconde entrée de la chambre de mixage CM.

La boucle chaude BC comprend des moyens de chauffage MCH destinés à chauffer l'air qui est issu (ici) de l'évaporateur EV et qui est destiné à l'habitacle H du véhicule V, éventuellement après un mélange avec de l'air moins chaud présent dans la chambre de mixage CM.

La chambre de mixage CM est connectée à des conduits qui sont, ici, destinés à alimenter des bouches de distribution Sk placées dans l'habitacle H du véhicule V (et ici au nombre de quatre (k = 1 à 4)). L'accès à ces conduits est contrôlé par les volets de distribution Vj (ici au nombre de deux (j = 1 ou 2), mais il pourrait y en avoir plus, par exemple trois ou quatre).

Le volet de mixage VM est destiné à contrôler la répartition de l'air, qui est fourni par le volet d'alimentation VA (et qui a ici traversé l'évaporateur EV), entre la chambre de mixage CM et les moyens de chauffage MCH. Il permet donc de mélanger (ou mixer) de façon contrôlée une partie de l'air qui a traversé la boucle froide BF (éventuellement en fonctionnement) et l'air qui a traversé la boucle chaude BC. Sa position dépend du mode de fonctionnement de l'installation IT.

Le mode de fonctionnement de l'installation IT est choisi par un usager du véhicule V ou par le calculateur CS, éventuellement en fonction de choix effectué(s) par un usager du véhicule V.

Comme illustré sur l'unique figure, un dispositif de dépollution d'air DD, selon l'invention, comprend au moins des moyens de recherche MR et des moyens de contrôle MCT chargés d'agir conjointement dès qu'un usager du véhicule V a demandé aux moyens de navigation (via un récepteur GPS ou Internet) MN de déterminer un itinéraire, débutant à une heure de départ choisie, en fonction de données cartographiques et de données d'information de circulation.

On entend ici par « itinéraire » un parcours débutant en un lieu de départ choisi et se terminant en un lieu d'arrivée choisi, en passant éventuellement par au moins un lieu intermédiaire choisi, et prenant éventuellement en compte au moins un critère ou paramètre choisi.

Les moyens de recherche MR sont agencés pour déterminer des données qui sont représentatives d'une qualité de l'air extérieur sur un itinéraire qui a été choisi par un passager, via les moyens de communication MCN.

Il est important de noter que ces données de qualité de l'air sont préférentiellement prévisionnelles. Il s'agit en effet de récupérer autant que possible des données qui seront représentatives de la qualité de l'air en des endroits de l'itinéraire lorsque le véhicule V s'y trouvera à des horaires estimés par les moyens de navigation MN compte tenu de prévisions de circulation. Lorsque l'on ne dispose pas d'une donnée de qualité de l'air prévisionnelle, on utilise la dernière donnée de qualité de l'air disponible et/ou la donnée de qualité de l'air prévisionnelle la plus proche de l'endroit d'intérêt (ou caractéristique) de l'itinéraire.

Par exemple, et comme illustré non limitativement sur l'unique figure, les moyens de recherche MR peuvent être agencés pour récupérer, via les moyens de communication MCN, les données de qualité de l'air extérieur auprès d'au moins un site d'informations SI qui est accessible via le réseau de communication RC voire même les données de localisation du véhicule.

Ce site d'information SI est par exemple hébergé par un serveur SR qui est connecté au réseau de communication RC, et mis à disposition par une entreprise publique ou privée. Les données fournies par un tel site SI peuvent être issues de stations de mesure de la qualité de l'air (installées à proximité de voies de circulation qui sont empruntées par les véhicules) ou d'un modèle de prévision de la qualité de l'air (on parle alors de données prévisionnelles).

Les données de qualité de l'air extérieur sont par exemple représentatives de la concentration d'au moins une espèce chimique à l'endroit où elles sont réalisées. Elles sont donc transmises par voie d'ondes aux moyens de communication MCN du véhicule V, en association avec la position géographique de l'endroit où elles ont été obtenues.

Afin d'éviter que les moyens de recherche MR récupèrent toutes les données de qualité de l'air extérieur disponibles pour l'itinéraire considéré, ce qui nécessiterait une bande passante importante, ces moyens de recherche MR sont préférentiellement agencés pour déterminer des endroits caractéristiques dans cet itinéraire en fonction de données cartographiques et de données d'information de circulation qui sont relatives à cet itinéraire. Dans ce cas, les moyens de recherche MR sont agencés pour déterminer ensuite des données représentatives de la qualité de l'air extérieur en ces endroits caractéristiques déterminés.

Ces endroits caractéristiques peuvent, par exemple, être des villes, des agglomérations, des zones industrielles, des périphériques, des tunnels, des péages, des zones habituelles d'embouteillage, et plus généralement tous les lieux de l'itinéraire où il existe un risque plus élevé de pollution dans la plage temporelle estimée de passage du véhicule V.

On notera que lorsque les moyens de navigation MN utilisent un récepteur GPS, la détermination des endroits caractéristiques se fait à partir des données cartographiques qui sont stockées dans les moyens de navigation MN, ou dans un support de stockage qui est accessible par ces derniers (MN).

Les moyens de contrôle MCT sont agencés pour déterminer et contrôler une stratégie de dépollution de l'air alimentant l'habitacle H sur l'itinéraire choisi, en fonction au moins des données de qualité de l'air extérieur déterminées par les moyens de recherche MR et de données cartographiques et d'information de circulation relatives à l'itinéraire issue d'un récepteur GPS ou par Internet (smartphone) ou encore via la localisation du véhicule au travers des moyens de communication MCN (GSM).

Le dispositif de dépollution d'air DD peut trouver les données cartographiques auprès des moyens de navigation MN ou les données de localisation par les moyens de communication MCN ou par Internet, pour les raisons évoquées précédemment.

Les informations de circulation relatives à un itinéraire sont préférentiellement prévisionnelles. Il s'agit en effet de récupérer autant que possible des informations qui seront représentatives de la circulation en des endroits de l'itinéraire lorsque le véhicule V s'y trouvera à des horaires estimés par les moyens de navigation MN compte tenu de prévisions de circulation. Lorsque l'on ne dispose pas d'une information prévisionnelle, on utilise la dernière information disponible. Par exemple, les moyens de recherche MR peuvent être agencés pour récupérer, via les moyens de communication MCN, les informations de circulation, voire de localisation, auprès d'au moins un site d'informations qui est accessible via le réseau de communication RC.

Si les moyens de contrôle MCT savent qu'au moins un niveau de concentration de la pollution extérieure devrait être supérieur à un seuil prédéfini dans la plage temporelle estimée de passage du véhicule V en un endroit de l'itinéraire, alors ils peuvent, par exemple, prévoir de déclencher une phase de dépollution un peu avant le début de cette plage temporelle estimée. Typiquement le déclenchement pourra être réalisé au plus tard une minute avant le début de la plage temporelle estimée. On notera que cette dernière valeur peut être éventuellement modulée en fonction de la vitesse du véhicule V.

En variante, les moyens de contrôle MCT peuvent être agencés pour déterminer des positions géographiques situées respectivement un peu avant des endroits de l'itinéraire où au moins un niveau de concentration de la pollution extérieure devrait être supérieur à un seuil prédéfini, et pour associer une phase de dépollution à chacune de ces positions géographiques déterminées. Dans ce cas, ils sont également agencés pour déclencher chaque phase de dépollution lorsqu'ils sont informés par les moyens de navigation MN de l'arrivée du véhicule V à la position géographique associée ou par les moyens de communication MCN de la localisation du véhicule V. Typiquement le déclenchement pourra être réalisé environ un kilomètre avant chaque endroit de l'itinéraire où au moins un niveau de concentration de la pollution extérieure devrait être supérieur au seuil prédéfini. On notera que cette dernière valeur peut être éventuellement modulée en fonction de la densité des stations de mesure (par exemple on peut prévoir une valeur de un kilomètre lorsque la densité des stations de mesure est élevée (milieu urbain), et une valeur de cinq kilomètres lorsque la densité des stations de mesure est faible (milieu rural)).

On notera que les moyens de contrôle MCT déterminent préférentiellement la durée de chaque phase de dépollution. Cette dernière durée dépend préférentiellement de l'estimée de la durée pendant laquelle le véhicule V va se trouver dans une zone polluée. Par conséquent, une stratégie de dépollution comprend au moins l'ensemble des plages temporelles de dépollution (ou en d'autres termes les début et fin de chaque phase de dépollution), ou en variante l'ensemble des positions géographiques où doivent être déclenchées les phases de dépollution et les durées de dépollution associées. Dans la première alternative, les moyens de contrôle MCT sont agencés pour déterminer les plages temporelles de dépollution en fonction d'estimées de positions géographiques du véhicule V à des instants estimés par les moyens de navigation MN via un récepteur GPS ou Internet, ces plages temporelles de dépollution participant à la définition de la stratégie.

On notera que lorsque le dispositif de dépollution d'air DD ne peut agir que sur le volet d'alimentation VA lors d'une phase de dépollution, la stratégie de dépollution ne comprend que l'ensemble des plages temporelles de dépollution ou bien l'ensemble des positions géographiques où doivent être déclenchées les phases de dépollution et les durées de dépollution associées. Chaque phase de dépollution peut alors consister à interdire l'alimentation de l'habitacle H en air extérieur en obturant totalement le premier conduit C1 avec le volet d'alimentation VA, et donc a n'autoriser l'alimentation de l'habitacle H qu'avec de l'air recirculé, sauf pendant de très courtes périodes destinées à régénérer l'air intérieur en oxygène. La dépollution de l'air résulte alors de la filtration effectuée en circuit fermé.

En revanche, lorsque le dispositif de dépollution d'air DD est un équipement additionnel, dédié à la dépollution et fonctionnant indépendamment de l'installation IT, il peut utiliser ses propres moyens de dépollution, ainsi qu'éventuellement le volet d'alimentation VA, lors d'une phase de dépollution. Par conséquent, la stratégie de dépollution comprend non seulement l'ensemble des plages temporelles de dépollution ou bien l'ensemble des positions géographiques où doivent être déclenchées les phases de dépollution et les durées de dépollution associées, mais également des données représentatives de chaque utilisation de ses propres moyens de dépollution et éventuellement du volet d'alimentation VA lors de chacune des phases de dépollution. Chaque phase de dépollution peut alors consister à faire fonctionner temporairement les moyens de dépollution propres au dispositif de dépollution d'air DD (et qui sont implantés dans l'installation IT et/ou dans l'habitacle H), ainsi qu'éventuellement à interdire l'alimentation de l'habitacle H en air extérieur en obturant totalement le premier conduit C1 avec le volet d'alimentation VA, et donc a n'autoriser l'alimentation de l'habitacle H qu'avec de l'air recirculé, sauf pendant de très courtes périodes destinées à régénérer l'air intérieur en oxygène.

Afin d'améliorer chaque stratégie, les moyens de contrôle MCT peuvent être avantageusement agencés pour déterminer et contrôler chaque stratégie en fonction également d'un nombre de passagers présents dans l'habitacle H et/ou de données météorologiques qui sont relatives à l'itinéraire considéré et/ou de données qui sont représentatives d'un état en cours d'au moins un filtre de dépollution FD.

Le nombre de passagers peut, par exemple, être obtenu auprès d'un ordinateur de bord du véhicule V, qui est par exemple informé par un capteur de présence installé dans chaque assise de siège dédiée à un passager ou dans chaque boucle de ceinture de sécurité, ou bien par une caméra.

Les données météorologiques sont par exemple récupérées par les moyens de recherche MR, via les moyens de communication MCN, auprès d'au moins un site d'informations qui est accessible via le réseau de communication RC.

Par ailleurs, ces données météorologiques sont préférentiellement prévisionnelles. Il s'agit en effet de récupérer autant que possible des données qui seront représentatives de la météorologie en des endroits de l'itinéraire lorsque le véhicule V s'y trouvera à des horaires estimés par les moyens de navigation MN compte tenu de prévisions de circulation. Lorsque l'on ne dispose pas d'une donnée météorologique prévisionnelle, on utilise la dernière donnée météorologique disponible.

Par exemple, ces données météorologiques peuvent être la température extérieure et l'hygrométrie extérieure. L'hygrométrie extérieure a notamment une influence importante sur la pollution extérieure. Il est en effet connu qu'en cas de pluie la pollution extérieure devient quasiment nulle.

L'usure (ou l'encrassement) d'un filtre de dépollution FD a un impact notable sur l'efficacité de dépollution et sur le débit d'air passant. Les données représentatives de l'état en cours d'un filtre de dépollution FD peuvent, par exemple, être déduites du nombre de kilomètres parcourus par le véhicule V depuis son dernier remplacement, en tenant compte éventuellement des lieux de circulation déduits des données de localisation (par exemple GPS) du véhicule V.

On notera que les moyens de recherche MR peuvent être également et éventuellement agencés pour déterminer des mises à jour de données de qualité de l'air extérieur sur l'itinéraire considéré pendant que le véhicule V emprunte ce dernier. Dans ce cas, les moyens de contrôle MCT sont agencés pour adapter la stratégie, initialement déterminée pour cet itinéraire, en fonction au moins des mises à jour déterminées et de mises à jour de données d'information de circulation relatives à cet itinéraire.

On comprendra que l'adaptation d'une stratégie consiste à redéfinir l'une au moins des phases de dépollution qui n'ont pas encore été effectuées et/ou à ajouter au moins une nouvelle phase de dépollution et/ou à supprimer au moins une phase de dépollution.

On notera également que dans l'exemple non limitatif illustré sur l'unique figure, les moyens de recherche MR et les moyens de contrôle MCT sont implantés dans le calculateur CS. Cela résulte du fait que le dispositif de dépollution d'air DD fait ici partie de l'installation IT. Mais cela n'est pas obligatoire. En effet, ils pourraient être implantés dans un autre équipement électronique. Par conséquent, les moyens de recherche MR et les moyens de contrôle MCT peuvent être réalisés sous la forme de modules logiciels (ou informatiques ou encore « software »), ou bien d'une combinaison de circuits électroniques (ou « hardware ») et de modules logiciels.

On décrit ci-après un exemple d'utilisation du dispositif de dépollution d'air DD.

Dans cet exemple, on considère qu'une famille de quatre personnes décide de partir à 7H00 d'un endroit A pour se rendre à un endroit B. Les moyens de navigation MN déterminent alors un itinéraire entre A et B, puis ils en informent le dispositif de dépollution d'air DD. Ce dernier (DD) leur demande alors de fournir des endroits caractéristiques de cet itinéraire. Dans cet exemple, les moyens de navigation MN indiquent que l'itinéraire devrait durer 7H00 et comporter une partie d'autoroute comprenant la traversée d'un tunnel sur 5 km, la traversée d'une grande zone industrielle avec un fort risque d'embouteillage à proximité de cette dernière, et un ralentissement avant d'atteindre B.

Le dispositif de dépollution d'air DD analyse ces informations fournies par les moyens de navigation MN, et détermine les données représentatives de la qualité de l'air prévue pour les trois endroits caractéristiques de l'itinéraire. Il déduit de ces données le fait que le niveau de concentration de la pollution extérieure sera supérieur au seuil prédéfini en chaque endroit caractéristique, et donc que la stratégie de dépollution comportera trois phases de dépollution pour chacun de ces endroits caractéristiques, compte tenu des conditions météorologiques prévues en ces derniers.

Connaissant la durée maximale de fermeture du volet d'alimentation VA pour isoler de l'air extérieur les passagers du véhicule V, la performance de dépollution du filtre de dépollution FD compte tenu de son état en cours, les conditions météorologiques prévues et les données de qualité de l'air extérieur, le dispositif de dépollution d'air DD va donc déterminer une stratégie comportant trois phases de dépollution définies chacune par une plage temporelle de dépollution, ou bien par une position géographique de déclenchement et la durée de dépollution associée.

Grâce à l'invention, on peut définir à l'avance, avant qu'un véhicule ne débute un itinéraire, une stratégie de dépollution comprenant des phases de dépollution que l'on déclenche ensuite avant que le véhicule ne parvienne dans des zones polluées, afin d'éviter que les passagers respirent de l'air pollué. De plus, les phases de dépollution étant réalisées alors que l'air intérieur est faiblement pollué, leur durée peut être réduite, ce qui permet de moins encrasser le(s) filtre(s) de dépollution et donc d'espacer les opérations de maintenance.

## Revendications

1. Dispositif de dépollution d'air (DD) pour un véhicule (V) comprenant un habitacle (H), des moyens de navigation (MN) agencés pour déterminer un itinéraire débutant à une heure de départ choisie en fonction de données cartographiques et de données d'information de circulation, et des moyens de communication (MCN) propres à se connecter à un réseau de communication (RC), ledit dispositif comprenant des moyens de recherche (MR) agencés pour déterminer des données représentatives d'une qualité de l'air extérieur sur ledit itinéraire, via lesdits moyens de communication (MCN), et des moyens de contrôle (MCT) agencés pour déterminer et contrôler une stratégie de dépollution de l'air alimentant ledit habitacle (H) sur ledit itinéraire, en fonction au moins desdites données de qualité de l'air extérieur déterminées et de données cartographiques et d'information de circulation relatives audit itinéraire, **caractérisé en ce que** lesdits moyens de contrôle (MCT) sont agencés pour déterminer des plages temporelles de dépollution en fonction d'estimées de positions géographiques dudit véhicule (V) à des instants estimés par lesdits moyens de navigation (MN), ces plages temporelles de dépollution participant à la définition de ladite stratégie, et **en ce que** lesdits moyens de contrôle (MCT) sont agencés pour déterminer des positions géographiques situées respectivement un peu avant des endroits de l'itinéraire où au moins un niveau de concentration de la pollution extérieure devrait être supérieur à un seuil prédéfini, pour associer une phase de dépollution à chacune desdites positions géographiques déterminées, et pour déclencher chaque phase de dépollution lorsqu'ils sont informés par lesdits moyens de navigation (MN) de l'arrivée dudit véhicule (V) à ladite position géographique associée.

2. Dispositif selon la revendication 1, **caractérisé en ce que** les moyens de recherche (MR) sont en outre agencés pour déterminer la localisation du véhicule et pour déterminer des données représentatives d'une qualité de l'air extérieur selon la localisation du véhicule.

3. Dispositif selon l'une des revendications 1 ou 2, **caractérisé en ce que** lesdits moyens de contrôle (MCT) sont agencés pour déterminer et contrôler ladite stratégie en fonction également d'un nombre de passagers présents dans ledit habitacle (H) et/ou de données météorologiques relatives audit itinéraire et/ou de données représentatives d'un état en cours d'au moins un filtre de dépollution (FD).

4. Dispositif selon l'une des revendications 1 à 3, **caractérisé en ce que** lesdits moyens de recherche (MR) sont agencés pour déterminer des endroits caractéristiques dans ledit itinéraire en fonction desdites données cartographiques et d'information de circulation relatives audit itinéraire, puis pour déterminer des données représentatives de la qualité de l'air extérieur en ces endroits caractéristiques déterminés.

5. Dispositif selon l'une des revendications 1 à 4, **caractérisé en ce que** lesdits moyens de recherche (MR) sont agencés pour déterminer des mises à jour de données de qualité de l'air extérieur sur ledit itinéraire pendant que ledit véhicule (V) emprunte ce dernier, et **en ce que** lesdits moyens de contrôle (MCT) sont agencés pour adapter ladite stratégie en fonction au moins desdites mises à jour déterminées et de mises à jour de données d'information de circulation relatives audit itinéraire.

6. Dispositif selon l'une des revendications 1 à 5, **caractérisé en ce que** lesdits moyens de recherche (MR) sont agencés pour récupérer, via lesdits moyens de communication (MCN), lesdites données de qualité de l'air extérieur auprès d'au moins un site d'informations (SI) accessible via ledit réseau de communication (RC).

7. Dispositif selon l'une des revendications 1 à 6, **caractérisé en ce que** lesdits moyens de recherche (MR) sont agencés pour récupérer, via lesdits moyens de communication (MCN) la localisation du véhicule.

8. Véhicule automobile (V) comprenant un habitacle (H) alimenté en air, **caractérisé en ce qu'**il comprend en outre un dispositif de dépollution d'air (DD) selon l'une des revendications précédentes et une installation de traitement d'air (IT) comprenant ledit dispositif de dépollution d'air (DD) et un volet d'alimentation (VA) propre à prendre différentes positions pour contrôler l'alimentation en air issu de l'extérieur dudit habitacle (H) et/ou en air issu de l'intérieur dudit habitacle (H), et **en ce que** les moyens de contrôle (MCT) dudit dispositif de dépollution d'air (DD) sont agencés pour contrôler la position dudit volet d'alimentation (VA) pendant des phases temporelles de dépollution de la stratégie de dépollution.

## Patentansprüche

1. Vorrichtung zur Luftreinigung (DD) für ein Fahrzeug (V), das einen Fahrgastraum (H), Navigationsmittel (MN), die eingerichtet sind, um eine Route zu bestimmen, die zu einer Abreiseuhrzeit beginnt, die in Abhängigkeit von kartographischen Daten und Verkehrsinformationsdaten ausgewählt ist, und Kommunikationsmittel (MCN) umfasst, die geeignet sind, sich an ein Kommunikationsnetzwerk (RC) anzuschließen, wobei die Vorrichtung Suchmittel (MR) umfasst, die eingerichtet sind, um Daten, die für eine Außenluftqualität auf der Route repräsentativ sind, über die Kommunikationsmittel (MCN) bestimmen, und Steuermittel (MCT), die eingerichtet sind, um eine Reinigungsstrategie der Luft, die den Fahrgastraum (H) auf der Route versorgt, in Abhängigkeit von mindestens den bestimmten Qualitätsdaten der Außenluft und Kartographiedaten sowie Verkehrsinformationsdaten in Zusammenhang mit der Route, zu bestimmen und zu steuern, **dadurch gekennzeichnet, dass** die Steuermittel (MCT) eingerichtet sind, um Reinigungszeitbereiche in Abhängigkeit von Schätzungen geographischer Positionen des Fahrzeugs (V) in Augenblicken, die von den Navigationsmitteln (MN) geschätzt werden, zu bestimmen, wobei diese Reinigungszeitbereiche an der Definition der Strategie teilnehmen, und dass die Steuermittel (MCT) eingerichtet sind, um geographische Positionen zu bestimmen, die jeweils etwas vor Stellen der Route liegen, wo mindestens ein Konzentrationsniveau und der Außenverschmutzung größer sein sollte als ein vorbestimmter Schwellenwert, um eine Reinigungsphase mit jeder der bestimmten geographischen Positionen zu assoziieren, und um jede Reinigungsphase auszulösen, wenn sie von den Navigationsmitteln (MN) über die Ankunft des Fahrzeugs (V) an der assoziierten geographischen Position informiert werden.

2. Vorrichtung nach Anspruch 1, **dadurch gekennzeichnet, dass** die Suchmittel (MR) außerdem eingerichtet sind, um die Lokalisierung des Fahrzeugs zu bestimmen, und um Daten, die für eine Qualität der Außenluft repräsentativ sind, gemäß der Lokalisierung des Fahrzeugs zu bestimmen.

3. Vorrichtung nach einem der Ansprüche 1 oder 2, **dadurch gekennzeichnet, dass** die Steuermittel (MCT) eingerichtet sind, um die Strategie auch in Abhängigkeit von der Anzahl von Fahrgästen, die in dem Fahrgastraum (H) anwesend sind, und/oder von meteorologischen Daten in Zusammenhang mit der Route und/oder von Daten, die für einen aktuellen Zustand mindestens eines Reinigungsfilters (FD) repräsentativ sind, zu bestimmen und zu steuern.

4. Vorrichtung nach einem der Ansprüche 1 bis 3, **dadurch gekennzeichnet, dass** die Suchmittel (MR) eingerichtet sind, um charakteristische Stellen auf der Route in Abhängigkeit von den kartographischen und Verkehrsinformationsdaten in Zusammenhang mit der Route zu bestimmen, um dann Daten zu bestimmen, die für die Außenluftqualität an diesen bestimmten charakteristischen Stellen repräsentativ sind.

5. Vorrichtung nach einem der Ansprüche 1 bis 4, **dadurch gekennzeichnet, dass** die Suchmittel (MR) eingerichtet sind, um Aktualisierungen von Außenluftqualitätsdaten auf der Route zu bestimmen, während das Fahrzeug (V) auf dieser fährt, und dass die Steuermittel (MCT) eingerichtet sind, um die Strategie in Abhängigkeit von mindestens den bestimmten Aktualisierungen und Aktualisierungen von Verkehrsinformationsdaten in Zusammenhang mit der Route zu bestimmen.

6. Vorrichtung nach einem der Ansprüche 1 bis 5, **dadurch gekennzeichnet, dass** die Suchmittel (MR) eingerichtet sind, um über die Kommunikationsmittel (MCN) die Qualitätsdaten der Außenluft bei mindestens einem Informationsstandort (SI) abzurufen, der über das Kommunikationsnetzwerk (RC) zugänglich ist.

7. Vorrichtung nach einem der Ansprüche 1 bis 6, **dadurch gekennzeichnet, dass** die Suchmittel (MR) eingerichtet sind, um über die Kommunikationsmittel (MCN) die Lokalisierung des Fahrzeugs abzurufen.

8. Kraftfahrzeug (V), das einen Fahrgastraum (H) umfasst, der mit Luft versorgt ist, **dadurch gekennzeichnet, dass** es außerdem eine Luftreinigungsvorrichtung (DD) nach einem der vorstehenden Ansprüche und eine Luftaufbereitungsanlage (IT) umfasst, die die Luftreinigungsvorrichtung (DD) umfasst, und eine Versorgungsklappe (VA), die geeignet ist, unterschiedliche Positionen einzunehmen, um die Versorgung mit Luft von außerhalb der Fahrgastzelle (H) und/oder mit Luft aus dem Inneren der Fahrgastzelle (H) zu steuern und dass die Steuermittel (MCT) der Luftreinigungsvorrichtung (DD) eingerichtet sind, um die Position der Versorgungsklappe (VA) während Reinigungszeitphasen der Reinigungsstrategie zu steuern.

## Claims

1. A device for pollution control of air (DD) for a vehicle (V) including a passenger compartment (H), navigation means (MN) arranged for determining a route starting at a selected departure time as a function of cartographic data and of traffic information data, and communication means (MCN) suitable to connect to a communication network (RC), said device including research means (MR) arranged to determine data representative of a quality of the exterior air on said route, via said communication means (MCN), and control means (MCT) arranged to determine and control a pollution control strategy of the air supplying said passenger compartment (H) on said route, as a function of at least said determined quality data of the exterior air and of cartographic data and traffic information relating to said route, **characterized in that** said control means (MCT) are arranged to determine pollution control time domains as a function of estimations of geographical positions of said vehicle (V) at estimated times by said navigation means (MN), these pollution control time domains participating in the definition of said strategy, and **in that** said control means (MCT) are arranged to determine geographical positions situated respectively a little before locations of the route where at least one level of concentration of the exterior pollution should be greater than a predefined threshold, so as to associate a pollution control phase at each of said determined geographical positions, and so as to trigger each pollution control phase when they are informed by said navigation means (MN) of the arrival of said vehicle (V) at said associated geographical position.

2. The device according to Claim 1, **characterized in that** the research means (MR) are furthermore arranged so as to determine the location of the vehicle and to determine data representative of an exterior air quality according to the location of the vehicle.

3. The device according to one of Claims 1 or 2, **characterized in that** said control means (MCT) are arranged so as to determine and control said strategy as a function also of a number of passengers present in said passenger compartment (H) and/or of meteorological data relating to said route and/or of data representative of a current status of at least one pollution control filter (FD).

4. The device according to one of Claims 1 to 3, **characterized in that** said research means (MR) are arranged so as to determine characteristic places in said route as a function of said cartographic data and of traffic information relating to said route, then so as to determine data representative of the quality of the exterior air at these determined characteristic places.

5. The device according to one of Claims 1 to 4, **characterized in that** said research means (MR) are arranged so as to determine updates of exterior air quality data on said route while the said vehicle (V) travels the latter, and **in that** said control means (MCT) are arranged so as to adapt said strategy as a function at least of said determined updates and of updates of traffic information data relating to said route.

6. The device according to one of Claims 1 to 5, **characterized in that** said research means (MR) are arranged so as to retrieve, via said communication means (MCN), said exterior air quality data from at least one information site (SI) accessible via said communication network (RC).

7. The device according to one of Claims 1 to 6, **characterized in that** said research means (MR) are arranged so as to retrieve, via said communication means (MCN), the location of the vehicle.

8. A motor vehicle (V) including a passenger compartment (H) supplied with air, **characterized in that** it furthermore includes a device for pollution control of air (DD) according to one of the preceding claims and an air treatment installation (IT) including said device for pollution control of air (DD) and a supply shutter (VA) suitable to adopt different positions for controlling the supply of air originating from the exterior of said passenger compartment (H) and/or of air originating from the interior of said passenger compartment (H), and **in that** the control means (MCT) of said device for pollution control of air (DD) are arranged so as to control the position of said supply shutter (VA) during pollution control time domains of the pollution control strategy.
